# EUROPÄISCHE PATENTSCHRIFT

(11) **EP 0 954 250 B1**
(45) Veröffentlichungstag und Bekanntmachung des Hinweises auf die Patenterteilung: **10.09.2003**
(21) Anmeldenummer: 97951161.5
(22) Anmeldetag: 10.11.1997
(51) Int. Cl.: A61C 1/05, F01D 15/06

(54) **DENTALTURBINE**
DENTAL TURBINE
TURBINE DENTAIRE

(30) Priorität: 06.12.1996 DE 19650748
(43) Veröffentlichungstag der Anmeldung: 10.11.1999
(73) Patentinhaber: Schmidinger, Frank, 84513 Töging (DE); Biebl, Herbert L., 84503 Altötting (DE)
(72) Erfinder: Schmidinger, Frank, 84513 Töging (DE); Biebl, Herbert L., 84503 Altötting (DE)
(74) Vertreter: Manitz, Finsterwald & Partner
(86) Internationale Anmeldenummer: EP9706244
(87) Internationale Veröffentlichungsnummer: WO98024382

(56) Entgegenhaltungen:
- CH-A- 433 394
- US-A- 3 147 951
- US-A- 4 203 222

## Beschreibung

Die vorliegende Erfindung betrifft eine Dentalturbine.

Eine derartige Turbine ist aus der CH-A 433 394 grundsätzlich bekannt, wobei die aus einem langgestreckten zylindrischen Körper mit endseitiger Erweiterung bestehende Turbine luftgelagert ist. Die zugeführte Treibluft wird im Gehäuse in einen ersten, die Luftlagerung des Rotors bewirkenden Anteil und in einen zweiten Anteil aufgeteilt, der zentral in den radial erweiterten Bereich des Rotors eingeleitet wird, in dem mehrere radial verlaufende Strömungskanäle vorgesehen sind. Diese Strömungskanäle münden im radial äußeren Bereich in Düsen, die tangential zu dem erweiferten, ein Kopfteil bildenden Bereich gerichtet sind und in eckige Rotorausschnitte münden, die unmittelbar der Gehäusewandung gegenüberliegen. In der Gehäusewandung sind mehrere über deren Umfang verteilte Luftauslaßöffnungen vorgesehen, so daß die durch die radialen Strömungskanäle geführte Luft intermittierend das Gehäuse verlassen kann.

Aus der US-A 3 147 951 ist eine Dentalturbine bekannt, deren langgestreckt zylindrischer Rotor luftgelagert ist, wozu ein erster Anteil der radial zugeführten Treibluft zum Zwecke der Luftlagerung des Rotors abgezweigt und ein zweiter Teil in Axialbohrungen im Rotor geleitet wird, von denen jeweils etwa tangential gerichtete Ausströmkanäle abzweigen und im Betrieb den Rotor antreiben.

Bei den bisher bekannten Dentalturbinen, die mit einem Versorgungsdruck von etwa 5 bar betrieben werden und eine Umdrehungszahl in der Größenordnung 250.000 Umdrehungen pro Minute aufweisen, entsteht während des Betriebs das allgemein bekannte Zahnarztbohrergeräusch, das aufgrund seiner hohen Intensität und seiner Frequenz auch durch geschlossene Türen hörbar ist. Dieses Geräusch stört nicht nur die behandelten und die im Warteraum befindlichen Patienten, sondern kann auch bei Zahnärzten Gehörschäden verursachen, da diese täglich dem Störgeräusch ausgesetzt sind. Zur Abhilfe wurde bereits vorgeschlagen, während der Behandlung Hörschutzeinrichtungen zu tragen.

Da bei derartigen Dentalturbinen die Schaufeln des Rotors tangential mit Druckluft beaufschlagt werden, entsteht beim Einschalten der Dentalturbine eine Querkraft, die für den behandelnden Zahnarzt störend ist, da hierdurch das Bohrgerät seitlich versetzt wird. Deshalb wäre es wünschenswert, wenn das Bohrgerät nach Einschalten der Dentalturbine keinen vom Zahnarzt jeweils auszugleichenden Versatz aufweisen würde.

Bei den bekannten Geräten ist es ferner nachteilig, daß bei Unterbrechen der Treibluft innerhalb des Turbinengehäuses ein Rücksaugeffekt auftritt, da der weiterlaufende Rotor aufgrund der abgeschalteten Treibluft einen Unterdruck erzeugt, wodurch aus dem Mundraum des Patienten Aerosole in das Rotorgehäuse eingesaugt werden, die Bakterien und dergleichen enthalten. Beim darauffolgenden Wiedereinschalten der Treibluft werden die Aerosolbestandteile wieder aus dem Turbinenraum gefördert, was unhygienisch ist und bei wechselnden Patienten die Gefahr der Übertragung von Krankheitserregern in sich birgt. Zur Vermeidung dieser Effekte wurden im Stand der Technik verschiedenste Lösungen vorgeschlagen, jedoch sind diese stets konstruktiv aufwendig.

Es ist das der Erfindung zugrundeliegende Problem (Aufgabe), eine Dentalturbine gemäß Anspruch 1 zu schaffen, welche die oben beschriebenen Probleme beseitigt.

Die Lösung dieser Aufgabe erfolgt durch die Merkmale des Anspruchs 1 und insbesondere dadurch, daß der Rotor einen Strömungskanal aufweist, dessen Auslaßöffnung der ausströmenden Treibluft eine Tangentialkomponente auferlegt. Hierdurch dreht sich der Rotor nicht mit der auf ihn auftreffenden Strömung sondern innerhalb des Strömungskanals wird ein Rückstoß erzeugt, der den Rotor in Drehung versetzt. Gleichzeitig bleibt bei einer Drehung der Abstand zwischen der Austrittsöffnung und der angeströmten Fläche des Rotors im wesentlichen konstant und die angeströmte Fläche des Rotors erfährt hierbei keine Gestaltänderung.

Es hat sich nämlich herausgestellt, daß das störende Pfeifgeräusch beim Betrieb der herkömmlichen Dentalturbinen nicht etwa durch die Lager oder dergleichen, sondern dadurch erzeugt wird, daß die Treibluft am Außenumfang des Rotors durch die einzelnen Schaufeln "zerhackt" wird. Da bei herkömmlichen Rotoren stets eine neue Turbinenschaufel in den Treib-luftstrahl gelangt, ändert sich hierdurch ständig die Gestalt der angeströmten Fläche sowie der Abstand der angeströmten Fläche zu der Austrittsöffnung. Durch die erfindungsgemäße Ausgestaltung des Rotors ist jedoch sichergestellt, daß auch bei einer Drehung des Rotors die ausströmende Treibluft stets auf eine konstante Fläche mit konstantem Abstand zu der Ausströmöffnung auftritt, wodurch das störende Geräusch vollkommen beseitigt ist.

Vorteilhafte Ausführungsformen der Erfindung sind in der Beschreibung, den Zeichnungen sowie den Unteransprüchen beschrieben.

Die Austrittsöffnung ist im wesentlichen konzentrisch zur Drehachse des Rotors angeordnet Hierbei ergibt sich der zusätzliche Vorteil, daß bei Beaufschlagen des Rotors mit Treibluft jegliche Querkraft beseitigt ist, die einen Versatz des Bohrgerätes verursachen könnte. Sofern die Querschnittsfläche der Austrittsöffnung senkrecht zur Drehachse verläuft, ergibt sich eine besonders gute Ankopplung.

Dem Gehäuse ist eine Rückführung für zurückströmende Treibluft vorgesehen, die mit einem ringförmigen Sammelkanal in Verbindung steht. Ein derartiger Sammelkanal begünstigt das Zurückströmen der aus dem Rotor austretenden Luft und das Sammeln dieser Luft in Richtung der Rückführung.

Nach einer weiteren vorteilhaften Ausführungsform der Erfindung ist der Strömungskanal an seinen vier Seiten geschlossen. Im Gegensatz zu den aus dem Stand der Technik bekannten Rotoren, die an ihrem Umfang mit Schaufeln oder dergleichen versehen sind, ermöglicht der bei dieser Ausführungsform vorgesehene Strömungskanal ein Erzeugen der Rückstoßwirkung im Inneren des Rotors. Dies trägt weiter dazu bei, eine störende Geräuschentwicklung zu verhindern.
Besonders vorteilhaft ist es, wenn der Strömungskanal einen im wesentlichen zentrisch angeordneten Axialeinlaß aufweist. Hierdurch entsteht beim Anströmen des Rotors keine Querkraft und somit auch kein seitlicher Versatz des Bohrgerätes.

Die Auslaßöffnung des Strömungskanals sind am Außenumfang des Rotors angeordnet. Bei dieser Ausführungsform liegen besonders günstige Strömungsverhältnisse vor, da die am Außenumfang des Rotors austretende Treibluft günstig gesammelt und zurückgeführt werden kann.

Nach einer weiteren Ausführungsform weist der Strömungskanal einen Einlaß und mehrere Auslaßöffnungen auf, die vorzugsweise symmetrisch angeordnet sind. Hierdurch wird ein besonders ruhiger Betrieb der Dentalturbine erzielt und ein Auswuchten des Rotors kann entfallen. Hierbei ist es besonders vorteilhaft, wenn der Strömungskanal ein radial verlaufendes Teilstück aufweist, da hierdurch die Treibluft auf dem kürzesten Weg zum Austrittspunkt geführt wird.

Der Strömungskanal weist ein im wesentlichen in Umfangsrichtung des Rotors verlaufendes Teilstück auf, das mit dem Außenumfang des Rotors konvergiert. Hierdurch sind besonders günstige Strömungsverhältnisse geschaffen, da die aus dem Rotor austretende Luft nicht zwischen Rotor und Gehäuse komprimiert wird, sondern sich in dem konvergierenden Teilstück entspannen kann.

Der Strömungskanal lenkt die darin geführte Strömung am äußeren Rand des Rotors um, da mit das größtmögliche Drehmoment erzielt wird. Auch ist am auslaßseitigen Ende des Strömungskanals einen Dekompressionsraum vorzusehen, um die Reibungsverluste durch die aus dem Rotor austretende und sich entspannende Luft gering zu halten.

Da durch die erfindungsgemäße Dentalturbine das störende Pfeifgeräusch völlig beseitigt ist, kann es vorteilhaft sein, auch noch die Lagerung des Rotors zu verbessern, um die noch vorhandenen Lagergeräusche weiter zu reduzieren. Hierzu kann zumindest ein Lager des Rotors als Tandemlager ausgebildet sein, welches vorzugsweise zwei Lager aufweist, wobei der Außenring des einen Lagers mit dem Innenring des anderen Lagers gekoppelt ist. Hierdurch halbiert sich die Wälzgeschwindigkeit und somit auch die durch das Lager erzeugte Geräuschentwicklung auf die Hälfte.

Die erfindungsgemäße Dentalturbine zeichnet sich dadurch aus, daß das störende Pfeifgeräusch vollkommen beseitigt ist. Ferner wird beim Einschalten der Dentalturbine keine störende Querkraft erzeugt, so daß das Bohrgerät bereits vor dem Einschalten exakt positioniert werden kann. Schließlich werden bei der erfindungsgemäßen Dentalturbine nach Ausschalten der Treibluft keine Aerosole und/oder Bakterien in den Turbinenraum eingesaugt, da - im Gegensatz zu den bekannten Rotoren - der erfindungsgemäße Rotor beim Auslaufen nicht wie eine Flügelradpumpe wirkt und die in der Rotorkammer befindliche Luft radial nach außen in den Rückführungskanal zentrifugiert. Erfindungsgemäß entsteht also im Bereich der Rotorwelle kein Unterdruck, der ein Nachströmen der Luft von außen durch die vorhandenen Lagerspalte oder dergleichen zur Folge haben könnte.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine Querschnittsansicht durch eine erfindungsgemäße Dentalturbine;
- Fig. 2: eine vergrößerte Querschnittsansicht des Rotors von Fig. 1; und
- Fig. 3: eine schematische Querschnittsansicht eines Tandemlagers, wobei der Rotor entlang der Linie III-III von Fig. 2 geschnitten ist.

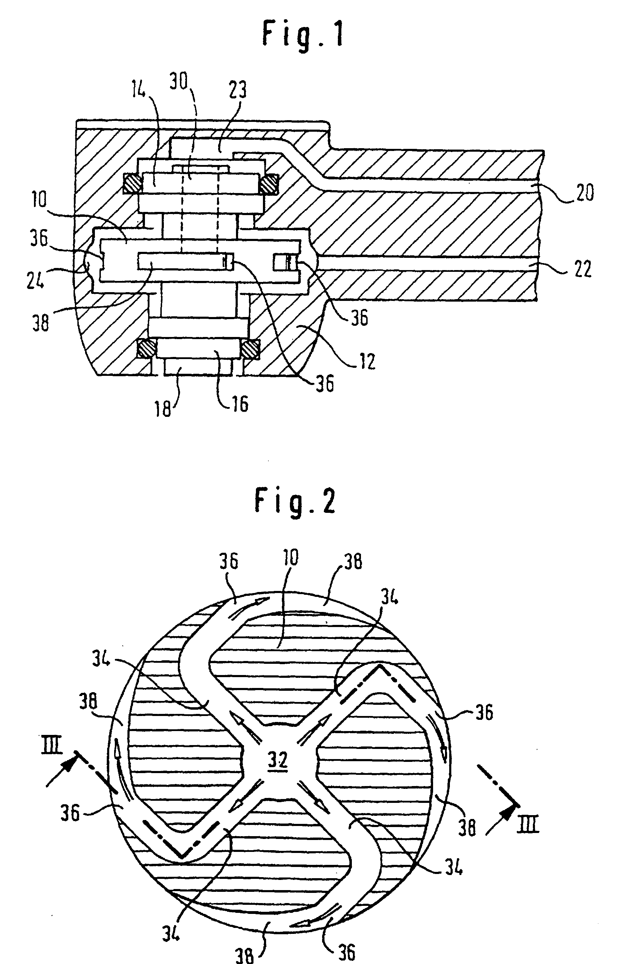

Die in Fig. 1 dargestellte Dentalturbine weist einen Rotor 10 auf, der in einem Gehäuse 12 aufgenommen ist, das als Handstück eines zahnärztlichen Bohrgerätes ausgebildet ist. Der Rotor 10 ist in dem Gehäuse 12 durch zwei nur schematisch angedeutete Lager 14 und 16 drehbar gehalten, die jeweils über einen O-Ring abgedichtet in dem Gehäuse 12 aufgenommen sind. In das untere Ende der Rotorwelle 18 kann auf herkömmliche Weise ein Bohrer oder dergleichen eingesteckt werden.

In dem Gehäuse 12 sind ein Zuführungskanal 20 und ein Rückführungskanal 22 vorgesehen, durch welche die mit Druck beaufschlagte Treibluft zu- und abströmt. Der Zuführungskanal 20, der durch das Handstück des Bohrgerätes verläuft, mündet in eine Austrittsöffnung 23, die axial und konzentrisch zur Drehachse des Rotors 10 angeordnet ist. Der Rückführungskanal 22 für zurückströmende Treibluft steht im Bereich des Rotorgehäuses mit einem ringförmigen Sammelkanal 24 in Verbindung, der den Rotor 10 an seinem Außenumfang umgibt. In dem Gehäuse sind ferner nicht dargestellte Zuführungen für Sprühwasser und Licht vorgesehen.

Der Rotor 10 der Dentalturbine weist einen Strömungskanal auf, der einen zentrisch angeordneten Axialeinlaß 30 besitzt, der sich in Richtung der Austrittsöffnung 23 axial nach außen öffnet, und der in Fig. 1 gestrichelt dargestellt ist. Das unterstromige Ende des Axialeinlasses 30 steht mit einem zentral angeordneten Verteilerabschnitt 32 (Fig. 2) in Verbindung, an dem sich vier in gleichmäßigen Winkelabständen angeordnete und radial verlaufende Teilstücke 34 anschließen.

Wie Fig. 2 zeigt, sind die Teilstücke 34 am äußeren Rand des Rotors 10 jeweils im Uhrzeigersinn, d.h. gleichsinnig, um ca. 90° gekrümmt, worauf sich jeweils eine Auslaßöffnung 36 anschließt. Die Auslaßöffnungen 36 befinden sich am Außenumfang des Rotors 10 und verleihen der ausströmenden Treibluft eine Tangentialkomponente.

Im Bereich der Auslaßöffnungen 36 weist der Auslauf jedes Teilströmungskanals ein in Umfangsrichtung des Rotors 10 verlaufendes Teilstück 38 auf, das mit dem Außenumfang des Rotors konvergiert. Hierdurch ist am auslaßseitigen Ende jedes Teilströmungskanals ein Dekompressionsraum vorgesehen, der sich zum Außenumfang des Rotors hin öffnet und der im Querschnitt gesehen eine sichelförmige Gestalt besitzt.

Bei Inbetriebnahme des vorstehend beschriebenen Bohrgerätes wird Treibluft, die einen Druck im Bereich von etwa 5 bis 10 bar aufweisen kann, durch den Zuführungskanal 20 zugeführt, wodurch diese aus der Austrittsöffnung 23 des Gehäuses 12 in Richtung der Rotorachse ausströmt. Die ausströmende Luft gelangt anschließend durch den Axialeinlaß 30 des Rotors 10 und von dort in den Verteilerabschnitt 32. Von dort strömt die Luft durch die Teilstücke 34 und wird kreuzförmig verteilt und jeweils in radiale Richtung abgelenkt. Im Bereich der am äußeren Rand des Rotors 10 vorgesehenen Umlenkungen wird jeder Teilstrom um 90° umgelenkt und strömt anschließend durch die Auslaßöffnungen 36 aus dem Rotor aus. Hierdurch wird auf den Rotor 10 an vier über den Umfang symmetrisch angeordneten Stellen ein Rückstoß ausgeübt, so daß sich dieser (in Fig. 2 entgegen dem Uhrzeigersinn) dreht. Im Bereich der Auslaßöffnungen 36 findet die ausströmende Treibluft jeweils einen Dekompressionsraum 38 vor, der ein sanftes Entspannen ermöglicht. Die Treibluft, die den Rotor durchströmt hat, wird in dem ringförmigen Sammelkanal 24 gesammelt und strömt durch den Rückführungskanal 22 zurück.

Beim Abschalten der Dentalturbine wird die Zuführung der unter Druck stehenden Treibluft gestoppt, wodurch der Rotor 10 ausläuft. Hierbei wird jedoch durch das untere Lager 16 des Rotors keine Luft und auch kein Aerosol in das Gehäuse 12 hineingesaugt, da der erfindungsgemäße Rotor keine saugende Förderwirkung erzielt. Auch ergibt sich beim Einschalten der Dentalturbine kein störender Ruck, da das auf den Rotor einwirkende Drehmoment völlig gleichmäßig und symmetrisch auf den Rotor verteilt ist.

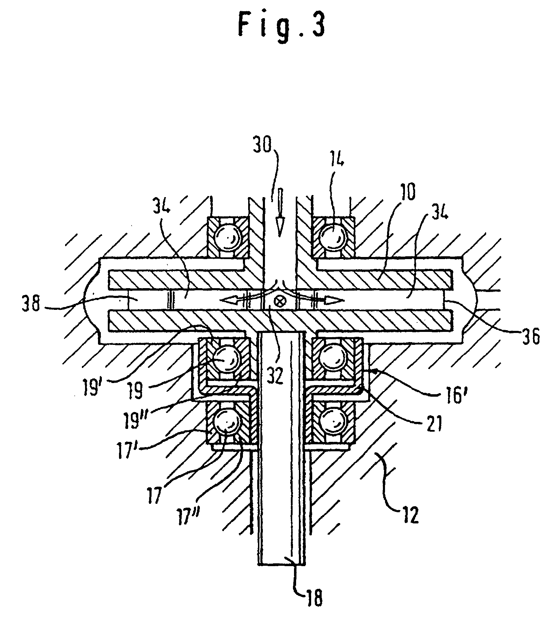

Fig. 3 zeigt eine weitere Ausführungsform eines unteren Lagers, das als Tandemlager 16' ausgebildet ist. Das Tandemlager 16' umfaßt zwei gekoppelte Lager 17 und 19, wobei der Außenring 19' des in Fig. 3 oberen Lagers über einen Kopplungsring 21 mit dem Innenring 17" des in Fig. 3 unteren Lagers 17 fest verbunden ist. Der Außenring 17' des unteren Lagers ist mit dem Gehäuse 12 verbunden. Der Innenring 19" des oberen Lagers 19 führt die Welle 18 des Rotors 10. Durch den napfartig ausgebildeten Kopplungsring 21 wird eine feste Verbindung zwischen den beiden Lagern hergestellt und gleichzeitig ein eventuelles Kippmoment abgestützt. Durch diese Lagerung halbiert sich die Wälzgeschwindigkeit und auch das entstehende Lagergeräusch auf die Hälfte. Selbstverständlich können beide Lager 14 und 16 des Rotors 10 als Tandemlager ausgebildet sein. Auch ist es möglich, die Lager als Radiallager oder als Horizontallager auszubilden. Das obere Lager 14 kann auch eine Abdichtung, beispielsweise Labyrinthdichtung aufweisen, um zu verhindern, daß die einströmende Treibluft durch das Lager und nicht durch den Axialeinlaß 30 strömt.

Die erfindungsgemäße Dentalturbine zeichnet sich durch ihren ruhigen Lauf, ihren ruckfreien Anlauf und ihre hohe Servicefreundlichkeit aus. Da der Rotor verglichen zu herkömmlichen Rotoren axial sehr schmal gebaut werden kann, läßt sich insgesamt die Bauhöhe der Dentalturbine im Bereich ihres Kopfstückes verringern, was insbesondere bei der Behandlung von Kindern Vorteile bringt.

## Patentansprüche

1. Dentalturbine mit einem Rotor (10), der in einem Gehäuse (12) drehbar aufgenommen ist, das eine Eintrittsöffnung (23) für Treibluft, einen Aufnahmeraum für den Rotor (10) und einen Treibluftauslaß (22) aufweist, wobei der Rotor über einen axialen Einlaß mit Treibluft beaufschlagbar ist und sich zum Außenumfang erstrekkende, im wesentlichen radial verlaufende und tangentiale Auslässe besitzende Strömungskanäle aufweist, über die die ausströmende Treibluft tangentiale, den Rotor (10) in Drehung versetzende Antriebskomponenten erzeugt,
wobei der Rotor (10) scheibenförmig ausgebildet ist,
wobei der Rotor (10) im Gehäuse (12) mittels Lagerstellen (14, 16) axial unverschiebbar gelagert ist,
wobei der Rotor (10) einen mitrotierenden, gelagerten und sich zur Eintrittsöffnung (23) erstreckenden Axialeinlaßteil (30) zur Treibluftzuführung aufweist,
wobei die im Rotor (10) vorgesehenen, im wesentlichen radial verlaufenden Strömungskanäle im äußeren Randbereich des Rotors (10) jeweils in ein im wesentlichen in Umfangsrichtung des Rotors (10) verlaufendes, den radialen Strömungskanal (34) fortsetzendes Teilstück (36) übergehen,
wobei der Rotor (10) von einem im Gehäuse (12) ausgebildeten ringförmigen Sammelkanal (24) umgeben ist, in den die Rotor-Strömungskanäle (34, 36) über im Rotor (10) ausgebildete Dekompressionsräume (38) münden, und wobei die Dekompressionsräume (38) eine im Querschnitt sichelförmige Gestalt besitzen.

2. Detalturbine nach Anspruch 1,
wobei die Eintrittsöffnung (23) im wesentlichen konzentrisch zur Drehachse des Rotors (10) angeordnet ist, wobei die Querschnittsfläche der Eintrittsöffnung (23) senkrecht zur Drehachse verläuft.

3. Dentalturbine nach Anspruch 1,
wobei der ringförmige Sammelkanal (24) mit einer Rückführung (22) für zurückströmende Treibluft verbunden ist.

4. Dentalturbine nach Anspruch 1,
wobei den Strömungskanälen ein zentral angeordneter Verteilerabschnitt (32) zugeordnet ist.

5. Dentalturbine nach Anspruch 1,
wobei zumindest ein Lager des Rotors (10) als Tandemlager (16') ausgebildet ist.

6. Dentalturbine nach Anspruch 5,
wobei das Tandemlager (16') zwei Lager (17, 19) aufweist, wobei der Außenring (19') des einen Lagers (19) mit dem Innenring (17") des anderen Lagers (17) gekoppelt ist.

## Claims

1. Dental turbine comprising a rotor (10) which is rotatably received in a housing (12) having an inlet opening (23) for propellant air, a receiving space for the rotor (10) and a propellant air outlet (22),
wherein the rotor can be acted on by propulsion air via an axial inlet and has substantially radially extending flow passages extending to the outer periphery and having tangential outlets, via which the outflowing propellant air produces tangential drive components which make the rotor (10) rotate,
wherein the rotor (10) is of disk-like shape;
wherein the rotor (10) is axially non-displaceably journalled in the housing (12) by means of bearings (14, 16);
wherein the rotor (10) has a co-rotating, journalled, axial inlet part (30) extending to the inlet opening (23) for the propellant air feed;
wherein the substantially radially extending flow passages provided in the rotor (10) in the outer marginal region of the rotor (10) each merge into a part (36) extending substantially in the circumferential direction of the rotor (10) and continuing the radial flow passage (34);
wherein the rotor (10) is surrounded by a ring-like collection channel (24) formed in the housing (12) and into which the rotor flow passages (34, 36) open via decompression spaces (38) formed in the rotor (10); and wherein the decompression spaces (38) have a scythe-like shape in cross-section.

2. Dental turbine in accordance with claim 1, wherein the inlet opening (23) is arranged substantially concentrically to the axis of rotation of the rotor (10), with the cross-sectional area of the inlet opening (23) extending perpendicular to the axis of rotation.

3. Dental turbine in accordance with claim 1, wherein the ring-like collection channel (24) is connected to a return (22) for propellant air which is flowing back.

4. Dental turbine in accordance with claim 1, wherein a centrally disposed distributor section (32) is associated with the flow passages.

5. Dental turbine in accordance with claim 1, wherein at least one bearing of the rotor (10) is formed as a tandem bearing (16').

6. Dental turbine in accordance with claim 5, wherein the tandem bearing (16') has two bearings (17, 19), with the outer ring (19') of the one bearing (19) being coupled to the inner ring (17") of the other bearing (17).

## Revendications

1. Turbine dentaire, comprenant un rotor (10) logé avec faculté de rotation dans un boîtier (12) qui présente une ouverture d'entrée (23) pour de l'air propulseur, une chambre de logement pour le rotor (10) et une sortie (22) pour l'air propulseur, ledit rotor étant susceptible d'être attaqué via une entrée axiale par de l'air propulseur, et présentant des canaux d'écoulement qui s'étendent vers la périphérie extérieure et possèdent des sorties sensiblement radiales et tangentielles au moyen desquelles l'air propulseur sortant engendre des composantes d'entraînement tangentielles qui mettent en rotation le rotor (10),
dans laquelle :
le rotor (10) est réalisé en forme de disque,
le rotor (10) est monté sans faculté de translation axiale dans le boîtier (12) au moyen de paliers (14, 16),
le rotor (10) comprend une partie d'entrée axiale (30) entraînée conjointement en rotation, montée sur paliers et s'étendant vers l'ouverture d'entrée (23), pour l'admission d'air propulseur,
les canaux d'écoulement prévus dans le rotor (10) et s'étendant sensiblement radialement se transforment respectivement, dans la zone de bordure extérieure du rotor (10), en des tronçons partiels (36) qui s'étendent sensiblement en direction périphérique du rotor (10) et qui prolongent les canaux d'écoulement radiaux (34),
le rotor (10) est entouré par un canal de collecte (24) de forme annulaire ménagé dans le boîtier (12), dans lequel débouchent les canaux d'écoulement (34, 36) du rotor via des chambres de décompression (38) réalisées dans le rotor (10), et
les chambres de décompression (38) possèdent en section transversale une configuration en forme de faucille.

2. Turbine dentaire selon la revendication 1, dans laquelle l'ouverture d'entrée (23) est agencée sensiblement concentrique à l'axe de rotation du rotor (10), et l'aire de section transversale de l'ouverture d'entrée (23) s'étend perpendiculairement à l'axe de rotation.

3. Turbine dentaire selon la revendication 1, dans laquelle le canal de collecte annulaire (24) est relié à un retour (22) pour l'air propulseur qui s'écoule en retour.

4. Turbine dentaire selon la revendication 1, dans laquelle un tronçon de répartition (32) agencé au centre est associé aux canaux d'écoulement.

5. Turbine dentaire selon la revendication 1, dans laquelle un palier au moins du rotor (10) est réalisé sous forme de palier en tandem (16').

6. Turbine dentaire selon la revendication 5, dans laquelle le palier en tandem (16') comprend deux paliers (17, 19), la bague extérieure (19') de l'un des paliers (19) étant couplée à la bague intérieure (17") de l'autre palier (17).
